**Europäisches Patentamt**

**European Patent Office**

**Office européen des brevets**

(19)

(11) Veröffentlichungsnummer: **0 192 921**
**B1**

(12) # EUROPÄISCHE PATENTSCHRIFT

(45) Veröffentlichungstag der Patentschrift:
**18.05.88**

(51) Int. Cl.⁴: **B 23 K 11/02**

(21) Anmeldenummer: **85890137.4**

(22) Anmeldetag: **24.06.85**

(54) Vorrichtung zum Stumpfschweissen.

(30) Priorität: **25.02.85 AT 555/85**

(43) Veröffentlichungstag der Anmeldung:
**03.09.86 Patentblatt 86/36**

(45) Bekanntmachung des Hinweises auf die Patenterteilung:
**18.05.88 Patentblatt 88/20**

(84) Benannte Vertragsstaaten:
**DE FR GB IT**

(56) Entgegenhaltungen:
**DE-A-2 832 789**
**DE-A-2 840 916**
**DE-B-2 620 190**

(73) Patentinhaber: **MAWAK Warenhandelsgesellschaft m.b.H., Khunngasse 17, A-1030 Wien (AT)**

(72) Erfinder: **Lisec, Peter, Bahnhofstrasse 34, A-3363 Amstetten- Hausmening (AT)**

(74) Vertreter: **Beer, Otto, Dipl.- Ing., Lindengasse 8, A-1071 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

### Beschreibung

Die Erfindung betrifft eine Vorrichtung zum Stumpfschweißen von Hohlprofilleisten, insbesondere von Profilleisten aus Aluminium, für Abstandhalterrahmen für Isolierglas, mit zwei Kontaktklemmen für die miteinander zu verbindenden Enden der Profilleisten, wobei die Kontaktklemmen an eine Schweißstromquelle anschließbar sind, eine Kontaktklemme, vorzugsweise die in Förderrichtung gesehen zweite Kontaktklemme, maschinengestellfest angeordnet ist, die andere, bewegliche Kontaktklemme auf einem am Maschinengestell in Förderrichtung über zwei nach Art eines Parallelogrammlenkerpaares mit Abstand voneinander angeordnete Lenkerpaare beweglich abgestützten Tisch angeordnet ist, und wobei der Tisch mit Hilfe eines Druckmittelzylinders bewegbar ist.

Die DE-Al-2 832 789 beschreibt eine Vorrichtung zum Stumpfschweißen von Hohlprofilleisten, die beispielsweise Profilleisten aus Aluminium, für Abstandhalterrahmen von Isolierglas sind. Die bekannte Vorrichtung besitzt zwei Kontaktklemmen für die miteinander zu verbindenden Enden der Profilleisten, wobei die Kontaktklemmen an eine Schweißstromquelle anschließbar sind. Eine der Kontaktklemmen ist maschinengestellfest angeordnet. Die andere Kontaktklemme ist auf einem am Maschinengestell in Förderrichtung über zwei nach Art eines Parallelogrammlenkerpaares mit Abstand voneinander angeordnete Lenkerpaare beweglich abgestützten Tisch angeordnet. Der die bewegliche Kontaktklemme tragende Tisch ist mit Hilfe eines doppeltwirkenden, hydraulischen Druckmittelzylinders hin- und herbewegbar. Zur seitlichen Führung des beweglichen Tisches ist ein im wesentlichen waagrecht ausgerichteter Lenker vorgesehen.

Der Erfindung liegt die Aufgabe zugrunde, eine Vorrichtung der eingangs genannten Art anzugeben, mit der auch dünnwandige Profilleisten für Abstandhalterrahmen von Isolierglas problemlos stumpf aneinander geschweißt werden können.

In Lösung dieser Aufgabe zeichnet sich die Vorrichtung erfindungsgemäß dadurch aus, daß die Lenkerarme des im wesentlichen unterhalb der beweglichen Kontaktklemme angeordneten Lenkerpaares zu einem Rahmen verbunden sind und daß zum Hin- und Herbewegen des die bewegliche Kontaktklemme tragenden Tisches ein Gegendruckzylinder vorgesehen ist, dessen Gegendruckkammer über ein Sitzventil schlagartig entspannbar ist.

Das Vorschieben der beweglichen Kontaktklemme bei der erfindungsgemäßen Vorrichtung wird mit Vorteil so gesteuert, daß die Vorschubgeschwindigkeit während des Schweißvorganges erhöht wird. Dabei bewährt es sich, wenn am Ende des Schweißvorganges die Stromzufuhr unterbrochen und die Enden der miteinander zu verschweißenden Profilleisten noch ruckartig aufeinanderzu bewegt werden. Durch diese ruckartige Bewegung wird eine allenfalls gebildete Oxidschicht (besonders bei Aluminium) zerrissen und es ergibt sich eine homogene Metall-zu-Metall-Verbindung. Diese Art und Weise des Vorschiebens der beweglichen Klemmbacke ist mit dem zum Hin- und Herbewegen des die bewegliche Kontaktklemme tragenden Tisches erfindungsgemäß vorgesehenen Gegendruckzylinder, dessen Gegendruckkammer über ein Sitzventil schlagartig entspannbar ist, möglich.

Dadurch, daß erfindungsgemäß die Lenkerarme des im wesentlichen unterhalb der beweglichen Kontaktklemme angeordneten Lenkerpaares zu einem Rahmen verbunden sind, ergibt sich eine besonders stabile Konstruktion des die bewegliche Kontaktklemme tragenden Tisches.

Die Ausbildung des für eine ordnungsgemäße Schweißung günstigen Schutzgaspolsters im Bereich der zu verschweißenden Enden der Profilleisten wird erfindungsgemäß dadurch unterstützt, daß in den einander zugekehrten Seitenflächen der Kontaktklemmen zu den Seitenflächen hin offene, vorzugsweise muldenartige Ausnehmungen vorgesehen sind, wobei im Bereich zwischen den Kontaktklemmen eine Leitung zum Zuführen von Schutzgas, beispielsweise Argon, während des Schweißvorganges ausmündet.

Um das Abströmen von Schutzgas weiter zu verhindern, kann im Rahmen der Erfindung vorgesehen sein, daß der Zwischenraum zwischen den im Abstand voneinander angenommenen Kontaktklemmen durch Leisten aus elektrischen Strom nicht leitendem Werkstoff abgedeckt ist, wobei die Leisten vorzugsweise an einer der Kontaktklemmen befestigt sind.

In einer praktischen Ausführungsform der Erfindung kann sich die Vorrichtung dadurch auszeichnen, daß jede der Kontaktklemmen eine untere, eine Führungsnut für die Hohlprofilleiste aufweisende Backe und eine vertikal verstellbare, obere Druckbacke aufweist. Die beispielsweise aus Kupfer oder einer Kupferlegierung bestehenden Backen der Kontaktklemmen dienen somit nicht nur der exakten Führung der zu verschweißenden Profilleisten, sondern auch gleichzeitig der Stromzufuhr.

Eine robuste Ausführungsform ergibt sich, wenn die bewegliche Backe an einem senkrecht nach hinten ragenden Lenker angeordnet ist, an den ein Antriebsmotor, vorzugsweise ein Druckmittelmotor, zum Niederdrücken der Backe angreift.

Insbesondere wenn Profilleisten für Abstandhalterrahmen miteinander zu längeren Profilleisten verschweißt werden, oder aber, wenn die beiden Enden einer zu einem Abstandhalterrahmen gebogenen Profilleiste miteinander zu verschweißen sind, ist es wesentlich, daß die Schweißraupen entfernt werden. Hiezu zeichnet sich die erfindungsgemäße Vorrichtung dadurch aus, daß im Anschluß an die Kontaktklemmen Vorrichtungen zum Abfräsen von Schweißraupen vorgesehen sind. Hiebei kommt es nicht so sehr darauf an, daß die im Isolierglas später außen liegende Wand der Profilleiste bearbeitet wird, so daß es im Rahmen der Erfindung hinreicht, wenn eine Fräsvorrichtung zum Bearbeiten der nach oben weisenden Wand und eine Fräsvorrichtung zum Bearbeiten der Seitenwände der Hohlprofilleiste vorgesehen ist.

Der Transport der Profilleiste oder aber des Abstandhalterrahmens zwischen den Fräsvorrichtungen kann dadurch erreicht werden, daß im Bereich der Fräsvorrichtungen ein parallel zur Förderbahn der Hohlprofilleiste hin- und herverschiebbarer, der Hohlprofilleiste zugeordneter Transportgreifer zum taktweisen Vorschieben der Schweißstelle in den Bereich der ersten Fräsvorrichtung und anschließend daran in den Bereich der zweiten Fräsvorrichtung, vorgesehen ist.

Hiebei bewährt es sich, wenn zwischen den Fräsvorrichtungen ein Niederhalter zum klemmenden Festlegen der Hohlprofilleiste während der Fräsvorgänge und während des Leerhubes des Transportgreifers vorgesehen ist.

Dank der Ausbildung des taktweise weiterfördernden Transportgreifers und der Klemmbacke genügt es gemäß einer Ausführungsform der Erfindung, wenn die Förderbahn für die Hohlprofilleisten im Bereich der Fräsvorrichtungen als Gleitbahn ausgebildet ist.

Gemäß einer weiteren Ausführungsform der Erfindung kann vorgesehen sein, daß die Fräsvorrichtung zum Bearbeiten der nach oben weisenden Wand der Hohlprofilleiste ein um eine zur Transportrichtung parallele Achse drehangetriebenes Fräswerkzeug umfaßt, das quer zur Transportrichtung vor- und zurückschiebbar ist. Diese Fräse für die nach oben weisende Wand der Hohlprofilleiste kann noch zur Anpassung an verschiedene Dicken der Hohlprofilleisten der Höhe nach justierbar sein.

Die Erfindung erstreckt sich auch darauf, daß das Fräswerkzeug zum Bearbeiten der Seitenwände der Hohlprofilleiste ein ortsfestes, um eine im wesentlichen vertikale Achse drehbares Fräswerkzeug und zu beiden Seiten desselben angeordnete Führungsrollen, welche gegen die eine Seitenwand der Hohlprofilleiste anliegen, und ein auf einem Schlitten quer zur Transportrichtung verschiebbares, um eine im wesentlichen vertikale Achse drehbares Fräswerkzeug aufweist, wobei auf dem Schlitten zu beiden Seiten des Fräswerkzeuges während des Fräsvorganges an der Seitenwand der Hohlprofilleiste anliegende Führungsrollen angeordnet sind. Diese Ausführungsform hat den Vorteil, daß sich diese Fräsvorrichtung ohne weitere Maßnahmen automatisch an die Breite der zu bearbeitenden Hohlprofilleiste anpaßt.

Gemäß einer Ausführungsform der Erfindung ist vorgesehen, daß der Transportgreifer zum taktweisen Vorschieben der Hohlprofilleiste zu beiden Seiten der Hohlprofilleisten angeordnete Klemmbacken aufweist, die durch einen Druckmittelmotor, vorzugsweise von beiden Seiten her, gleichzeitig in Anlage an die Seitenwände der Hohlprofilleiste vorschiebbar sind. Dabei kann noch vorgesehen sein, daß die Klemmbacken des Transportgreifers auf einem Schlitten angeordnet sind, der auf Führungsschienen durch einen Anriebsmotor, vorzugsweise einen Druckmittelmotor, hin- und herverschiebbar ist. Dieses Merkmal läßt sich besonders einfach dadurch verwirklichen, daß die Klemmbacken auf am Schlitten angeordneten Führungsschienen geführt sind, wobei die eine Klemmbacke mit dem Kolben und die andere Klemmbacke mit dem Zylinder eines Druckmittelmotors gekuppelt ist.

Die Steuerungen der Bewegungen des beweglichen Tisches und gegebenenfalls auch die Steuerung der Stromzufuhr zu den Kontaktklemmen kann durch dem beweglichen Tisch zugeordnete, durch Mikrometerschrauben hinsichtlich ihres Schaltzeitpunktes einstellbare Mikroschalter erfolgen.

Falls auf der erfindungsgemäßen Vorrichtung die Enden einer zu einem Abstandhalterrahmen gebogenen Hohlprofilleiste, die für gewöhnlich im Bereich eines Rahmenschenkels angeordnet sind, verschweißt werden sollen, dann bewährt es sich, wenn erfindungsgemäß von der Führungsbahn für die zu Abstandhalterrahmen gebogenen Hohlprofilleisten eine um wenige Grad nach hinten geneigte Stützwand nach oben ragt, und daß in der Stützwand Ausschnitte für die Klemmbacken, die Fräsvorrichtungen und die Niederhaltebacke vorgesehen sind.

Wenn hingegen gerade, der Vorrichtung linear zugeführte Hohlprofilleisten miteinander zu längeren Einheiten zu verschweißen sind, von welchen dann Stücke mit vorgegebener Länge beispielsweise einer Vorrichtung zum Biegen von Hohlprofilleisten zu Abstandhalterrahmen für Isolierglas zuzuführen sind, dann bewährt sich eine Ausführungsform, bei welcher nach den Kontaktklemmen ein die Länge der Hohlprofilleiste erfassendes Meßglied, z. B. ein mit einem auf der sich bewegenden Hohlprofilleiste abrollenden Rad ausgerüsteter Inkrementalgeber, und eine mit dem Meßglied zum Ablängen von Profilleistenstücken vorgebbarer Länge wirkungsmäßig gekuppeltes Trenngerät, z. B. eine Kappkreissäge od. dgl., vorgesehen ist. Mit dieser Maßnahme ist es ohne weiters möglich, von den zusammengeschweißten Hohlprofilleistenstücken Abschnitte mit vorgegebener Länge abzulängen.

Werden die Hohlprofilleisten, wie oben erwähnt, einer Vorrichtung zum Biegen derselben zu Abstandhalterrahmen für Isolierglas zugeführt, dann ist es günstig, wenn man die Mitte des Hohlprofilleistenstückes kennt. Hiezu kann im Rahmen der Erfindung vorgesehen sein, daß mit dem Meßglied ein Markierwerkzeug zum Markieren der Mitte eines abgelängten oder abzulängenden Profilleistenstückes gekuppelt ist. Dabei kann das Markierwerkzeug erfindungsgemäß einen um eine quer zur Transportrichtung verlaufende Achse verschwenkbaren Hebel mit einer, der oberen Wand der Hohlprofilleiste zugekehrten und diese kerbmarkierende Nase aufweisen, wobei zum Verschwenken des Markierhebels ein Druckmittelzylinder od. dgl. vorgesehen ist.

Weitere Einzelheiten und Merkmale der Erfindung ergeben sich aus der nachstehenden Beschreibung eines bevorzugten Ausführungsbeispieles derselben. Es zeigt:

Figur 1 eine Stumpfschweißmaschine für Hohlprofilleisten in Seitenansicht und

Figur 2 die Maschine aus Figur 1 in Draufsicht.

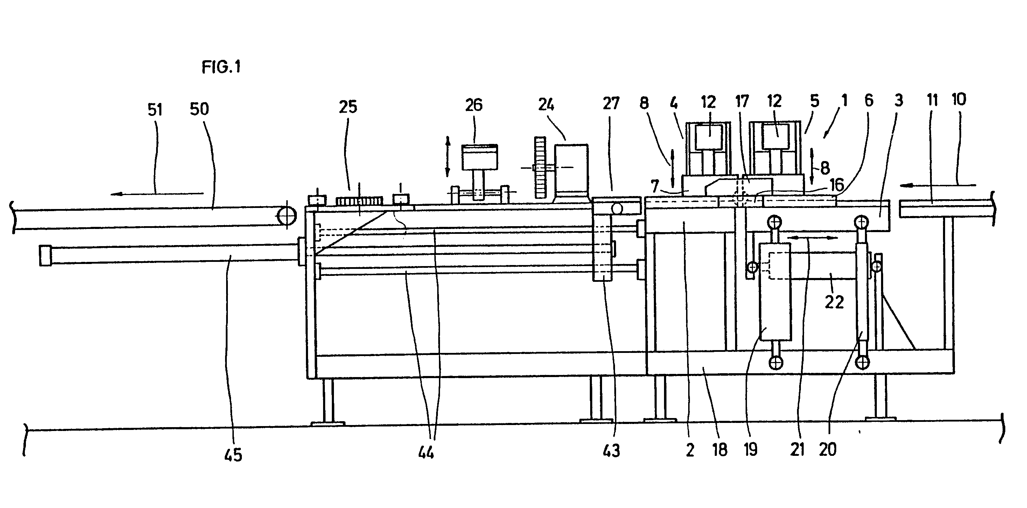

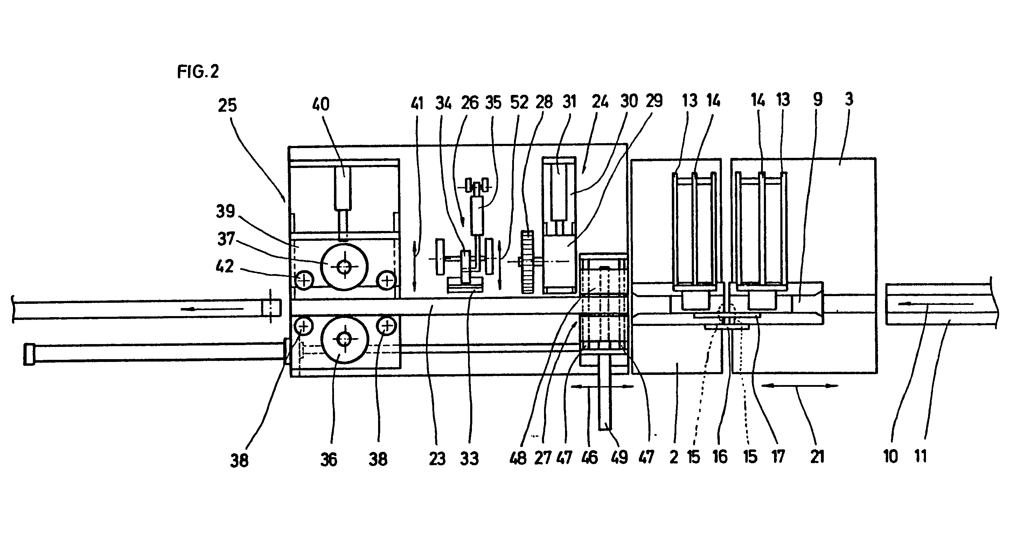

Auf einem quer zur Bildebene der Figur 1 in zwei Hälften 2 und 3 geteilten Tisch 1 sind zwei Kontaktklemmen 4 und 5 angeordnet. Jede der Kontaktklemmen 4 und 5 umfaßt eine am Tisch 1 angeordnete untere Backe 6 sowie eine in Richtung der Doppelpfeile 8 auf- und abbewegbare Druckbacke 7. Wie insbesondere aus Figur 2 ersichtlich, besitzt jede der unteren Backen 6 eine Führungsnut 9 für eine in Richtung des Pfeiles 10 auf einer Fördervorrichtung 11 zugeführte Hohlprofilleiste, beispielsweise eine Profilleiste aus Aluminium oder Aluminiumlegierung, wie sie für Abstandhalterrahmen für Isolierglasscheiben verwendet wird.

Die Druckbacken 7 der Kontaktklemmen 4 und 5 sind mit Hilfe von Druckmittelmotoren 12 auf- und abbewegbar (Pfeile 8), wobei die Druckmittelmotore 12 auf auf den Tischen aufgebauten Gestellen 13 befestigt sind und an die Druckbacken 7 tragenden Lenkern 14 angreifen.

Wie in Figur 1 und Fig 2 angedeutet, sind in den einander zugekehrten Seitenflächen der Backen 6 und der Druckbacken 7 der beiden Kontaktklemmen 4 und 5 muldenartige Ausnehmungen 15 vorgesehen. Dadurch wird die Ausbildung eines Schutzgaspolsters unterstützt, wobei das Schutzgas über eine nicht gezeigte Leitung in den Stoßbereich zwischen den beiden Kontaktklemmen 4 und 5 zugeführt wird. Diese Ausbildung eines Schutzgaspolsters wird noch durch mit der Kontaktklemme 5 verbundene Abdeckleisten 16 und 17, die aus einem elektrischen Strom nicht leitenden Werkstoff bestehen, unterstützt.

Der bewegliche Teil 3 des Tisches 1 ist am Maschinengestell 18 über zwei Lenkerpaare 19 und 20 in Richtung des Doppelpfeiles 21 beweglich, wozu ein Druckmittelmotor 22 vorgesehen ist. Aus Figur 1 ist ersichtlich, daß das unter der Kontaktklemme 5 angeordnete Lenkerpaar 19 massiver ausgebildet ist, wobei die Lenker dieses Lenkerpaares 19 vorzugsweise zu einem Rahmen miteinander zu einem Rahmen verbunden sind.

Der Antriebsmotor 22 für den beweglichen Tisch 3 ist ein Gegendruckzylinder, der so mit Druckmittel beauschlagbar ist, daß die Vorschubgeschwindigkeit während des Schweißvorganges kontinuierlich gesteigert wird. Im Gegendruckteil des Druckmittelzylinders 22 ist ein Sitzventil (nicht gezeigt) vorgesehen, das eine plötzliche Entspannung zuläßt, so daß am Ende des Schweißvorganges bei schon abgeschaltetem Strom ein kurzer Schlag des in der beweglichen Kontaktklemme 5 gehaltenen Profilstückes auf das in der ortsfesten Kontaktklemme 4 gehaltene Profilstück zu ausgeführt wird.

Die Steuerung der Bewegungen und vorzugsweise auch des Schweißstromes erfolgt durch dem beweglichen Tisch 3 zugeordnete Mikroschalter, deren Schaltpunkte durch Mikrometerschrauben einstellbar sind. Im Anschluß an den Tisch 1 sind im Bereich der als Gleitbahn 23 ausgebildeten Führungsbahn für die miteinander verschweißten Hohlprofilstücke zwei Fräsvorrichtungen 24 und 25 und zwischen diesen ein Niederhalter 26 vorgesehen. Um die Schweißstelle einer Hohlprofilleiste taktweise von der Fräsvorrichtung 24 zur Fräsvorrichtung 25 zu fördern, ist weiters ein Transportgreifer 27 vorgesehen.

Die Fräsvorrichtung 24 ist der nach oben weisenden Wand einer Hohlprofilleiste zugeordnet, um die dort vorgesehene Schweißraupe abzutragen. Hiezu ist die Frässcheibe 28 der Fräsvorrichtung 24 und ihr Antriebsmotor 29 auf einer Führungen aufweisenden Gleitplatte durch einen Druckmittelmotor 31 in Richtung des Doppelpfeiles 32 vor- und zurückverschiebbar.

Die Niederhaltevorrichtung 26 umfaßt eine gegebenenfalls eine Auflage aus weichem Werkstoff tragende Niederhaltebacke 33, die an einem Hebel 34 durch einen Druckmittelmotor 35 verschwenkbar gelagert ist.

Die Fräsvorrichtung 25 dient zum Bearbeiten der Seitenwände einer Hohlprofilleiste, um dort vorhandene Schweißraupen im Bereich der Schweißstelle abzutragen. Hiezu besitzt die Fräsvorrichtung 25 zwei Frässcheiben 36 und 37, wobei die Frässcheibe 36 und die beidseitig angeordneten Führungsrollen 38 maschinengestellfest gelagert sind. Die Frässcheibe 37 hingegen ist auf einem Schlitten 39 durch einen Druckmittelmotor in Richtung des Doppelpfeiles 21 vor- und zurückschiebbar. Zur Ausführung der Fräsarbeit wird der Druckmittelmotor 40 betätigt, und die Frässcheibe 37 legt sich durch die ihr zugeordneten Führungsrollen 42 an die ihr zugekehrte Seitenwand der Hohlprofilleiste an. Eine besondere Steuerung unter Berücksichtigung der Breite der zu bearbeitenden Hohlprofilleiste ist dabei dank der Führungsrollen 38 und 42 nicht erforderlich.

Der Transportgreifer 27 umfaßt einen Schlitten 43, der auf Führungsstäben 44 durch einen Druckmittelmotor 45 hin- und herbewegt werden kann (Pfeil 46). Am Schlitten 43 sind auf Führungsstäben zu beiden Seiten der Führungsbahn 23 angeordnete Klemmbacken 48 verschiebbar angeordnet. Zur Betätigung der Klemmbacken 48 ist ein Druckmittelzylinder 49 vorgesehen, wobei die Kolbenstange mit der einen und der Mantel des Zylinders mit der anderen der Klemmbacken 48 verbunden ist, so daß diese bei Betätigung des Druckmittelzylinders 49 gleichzeitig bewegt werden.

Durch entsprechende Betätigung des Druckmittelzylinders 45 wird die Schweißstelle zunächst in den Bereich der Fräsvorrichtung 24 für die nach oben weisende Wand der Hohlprofilleiste befördert, dann der Niederhalter 26 betätigt, worauf der Transportgreifer 27 wieder ausholt und nach dem Lösen des Niederhalters 26 die Schweißstelle in den Bereich der Fräsvorrichtung 25 bewegt. Nachdem so die beiden Seitenwände und die obere Wand der Hohlprofilleiste bearbeitet worden sind, kann diese über ein Transportband 50 in Richtung des Pfeiles 51 wegbefördert werden.

Die erfindungsgemäße frei schwimmende Lagerung des die bewegliche Kontaktklemme 5 tragenden Tisches 3 hat gegenüber bekannten Schweißvorrichtungen, bei welchen die bewegliche Kontaktklemme auf einer frei stehenden, federnden Platte gehaltert ist, insbesondere für das Verschweißen dünnwandiger Profile (z. B. Abstandhalterprofilrohre) den Vorteil, daß die bei den bekannten Vorrichtungen auftretenden Schwingungen, welche die Güte der Schweißverbindung beeinträchtigen, nicht auftreten können. Derartige schädliche Schwingungen treten bei der erfindungsgemäßen Vorrichtung mit der frei schwimmend gehalterten beweglichen Kontaktklemme 5 auch dann nicht auf, wenn die weiter oben erwähnte ruckartige Bewegung der miteinander zu verschweißenden Profilleisten ausgeführt wird.

**Patentansprüche**

1. Vorrichtung zum Stumpfschweißen von Hohlprofilleisten, insbesondere von Profilleisten aus Aluminium, für Abstandhalterrahmen für Isolierglas, mit zwei Kontaktklemmen für die miteinander zu verbindenden Enden der Profilleisten, wobei die Kontaktklemmen (4 und 5) an eine Schweißstromquelle anschließbar sind, eine Kontaktklemme (4), vorzugsweise die in Förderrichtung gesehen zweite Kontaktklemme (4), maschinengestellfest angeordnet ist, die andere, bewegliche Kontaktklemme (5) auf einem am Maschinengestell (18) in Förderrichtung (Pfeil 10) über zwei nach Art eines Parallelogrammlenkerpaares mit Abstand voneinander angeordnete Lenkerpaare (19 und 20) beweglich abgestützten Tisch (3) angeordnet ist, und wobei der Tisch (3) mit Hilfe eines Druckmittelzylinders (22) bewegbar ist, dadurch gekennzeichnet, daß die Lenkerarme des im wesentlichen unterhalb der beweglichen Kontaktklemme (5) angeordneten Lenkerpaares (19) zu einem Rahmen verbunden sind und daß zum Hin- und Herbewegen (Pfeil 21) des die bewegliche Kontaktklemme (5) tragenden Tisches (3) ein Gegendruckzylinder (22) vorgesehen ist, dessen Gegendruckkammer über ein Sitzventil schlagartig entspannbar ist.

2. Vorrichtung nach Anspruch 1, dadurch gekennzeichnet, daß der Zwischenraum zwischen den mit Abstand voneinander angeordneten Kontaktklemmen (4 und 5) durch Leisten (16 und 17) aus elektrischen Strom nicht leitendem Werkstoff abgedeckt ist, wobei die Leisten (16, 17) vorzugsweise an einer der Kontaktklemmen (5) befestigt sind.

3. Vorrichtung nach Anspruch 1 oder 2, dadurch gekennzeichnet, daß jede der Kontaktklemmen (4 und 5) eine untere, eine Führungsnut (9) für die Hohlprofilleiste aufweisende Backe (6) und eine vertikal (Pfeil 8) verstellbare, obere Druckbacke (7) aufweist.

4. Vorrichtung nach Anspruch 3, dadurch gekennzeichnet, daß die bewegliche Backe (7) an einem senkrecht nach hinten ragenden Lenker (14) angeordnet ist, an dem ein Antriebsmotor (12), vorzugsweise ein Druckmittelmotor, zum Niederdrücken der Backe (7) angreift.

5. Vorrichtung nach einem der Ansprüche 1 bis 4, dadurch gekennzeichnet, daß im Anschluß an die Kontaktklemmen (4 und 5) Vorrichtungen (24 und 25) zum Abfräsen von Schweißraupen vorgesehen sind.

6. Vorrichtung nach Anspruch 5, dadurch gekennzeichnet, daß eine Fräsvorrichtung (24) zum Bearbeiten der nach oben weisenden Wand und eine Fräsvorrichtung (25) zum Bearbeiten der Seitenwände der Hohlprofilleiste vorgesehen ist.

7. Vorrichtung nach Anspruch 5 oder 6, dadurch gekennzeichnet, daß im Bereich der Fräsvorrichtungen (24 und 25) ein parallel zur Förderbahn (23) der Hohlprofilleiste hin- und herverschiebbarer, der Hohlprofilleiste zugeordneter Transportgreifer (27) zum taktweisen Vorschieben der Schweißstelle in den Bereich der ersten Fräsvorrichtung (24) und anschließend daran in den Bereich der zweiten Fräsvorrichtung (25), vorgesehen ist.

8. Vorrichtung nach Anspruch 6 oder 7, dadurch gekennzeichnet, daß zwischen den Fräsvorrichtungen (24 und 25) ein Niederhalter (26) zum klemmenden Festlegen der Hohlprofilleiste während der Fräsvorgänge und während des Leerhubes des Transportgreifers (27) vorgesehen ist.

9. Vorrichtung nach einem der Ansprüche 5 bis 8, dadurch gekennzeichnet, daß die Förderbahn für die Hohlprofilleiste im Bereich der Fräsvorrichtungen (24 und 25) als Gleitbahn (23) ausgebildet ist.

10. Vorrichtung nach einem der Ansprüche 6 bis 9, dadurch gekennzeichnet, daß die Fräsvorrichtung (24) zum Bearbeiten der nach oben weisenden Wand der Hohlprofilleiste ein um eine zur Transportrichtung (Pfeil 10, 51) parallele Achse drehangetriebenes Fräswerkzeug (28) umfaßt, das quer (Pfeil 32) zur Transportrichtung (Pfeile 10, 51) vor- und zurückschiebbar ist.

11. Vorrichtung nach einem der Ansprüche 6 bis 10, dadurch gekennzeichnet, daß das Fräswerkzeug (25) zum Bearbeiten der Seitenwände der Hohlprofilleiste ein ortsfestes, um eine im wesentlichen vertikale Achse drehbares Fräswerkzeug (36) und zu beiden Seiten desselben angeordnete Führungsrollen (38), welche gegen die eine Seitenwand der Hohlprofilleiste anliegen, und ein auf einem Schlitten (39) quer zur Transportrichtung (Pfeil 10, 51) verschiebbares, um eine im wesentlichen vertikale Achse drehbares Fräswerkzeug (37) aufweist, wobei auf dem Schlitten (39) zu beiden Seiten des Fräswerkzeuges (37) während des Fräsvorganges an der Seitenwand der Hohlprofilleiste anliegende Führungsrollen (42) angeordnet sind.

12. Vorrichtung nach einem der Ansprüche 7 bis 11, dadurch gekennzeichnet, daß der Transportgreifer (27) zum taktweisen Vorschieben der Hohlprofilleiste auf beiden Seiten der Hohlprofilleisten angeordnete Klemmbacken (48) aufweist, die durch einen Druckmittelmotor (49), vorzugsweise von beiden Seiten her, gleichzeitig in Anlage an die Seitenwände der Hohlprofilleiste vorschiebbar sind.

13. Vorrichtung nach Anspruch 12, dadurch gekennzeichnet, daß die Klemmbacken (48) des Transportgreifers auf einem Schlitten (43) angeordnet sind, der auf Führungsschienen (44) durch einen Antriebsmotor (45), vorzugsweise einen Druckmittelmotor, hin- und herverschiebbar ist.

14. Vorrichtung nach Anspruch 12 oder 13, dadurch gekennzeichnet, daß die Klemmbacken (48) auf am Schlitten (43) angeordneten Führungsschienen (47) geführt sind, wobei die eine Klemmbacke (48) mit dem Kolben und die andere Klemmbacke (48) mit dem Zylinder eines Druckmittelmotors (49) gekuppelt ist.

15. Vorrichtung nach einem der Ansprüche 1 bis 14, dadurch gekennzeichnet, daß dem beweglichen Tisch (3) durch Mikrometerschrauben einstellbare Mikroschalter zur Steuerung der Stromzufuhr zu den Kontaktklemmen (4 und 5) und/oder der Bewegungen des beweglichen Tisches (3) zugeordnet sind.

16. Vorrichtung nach einem der Ansprüche 1 bis 15, dadurch gekennzeichnet, daß von der Führungsbahn für die zu Abstandhalterrahmen gebogenen Hohlprofilleisten eine um wenige Grad nach hinten geneigte Stützwand nach oben ragt, und daß in der Stützwand Ausschnitte für die Kontaktklemmen (4 und 5), die Fräsvorrichtungen (24 und 25) und die Niederhaltebacke (26) vorgesehen sind.

17. Vorrichtung nach einem der Ansprüche 1 bis 15, dadurch gekennzeichnet, daß nach den Kontaktklemmen (4 und 5) ein die Länge der Hohlprofilleiste erfassendes Meßglied, z. B. ein mit einem auf der sich bewegenden Hohlprofilleiste abrollenden Rad ausgerüsteter Inkrementalgeber, und eine mit dem Meßglied zum Ablängen von Profilleistenstücken vorgebbarer Länge wirkungsmäßig gekuppeltes Trenngerät, z. B. eine Kappkreissäge od. dgl., vorgesehen ist.

18. Vorrichtung nach Anspruch 17, dadurch gekennzeichnet, daß mit dem Meßglied ein Markierwerkzeug zum Markieren der Mitte eines abgelängten oder abzulängenden Profilleistenstückes gekuppelt ist.

19. Vorrichtung nach Anspruch 18, dadurch gekennzeichnet, daß das Markierwerkzeug einen um eine quer zur Transportrichtung (Pfeile 10, 51) verlaufende Achse verschwenkbaren Hebel mit einer, der oberen Wand der Hohlprofilleiste zugekehrten und diese kerbmarkierenden Nase aufweist, wobei zum Verschwenken des Hebels ein Druckmittelzylinder od. dgl. vorgesehen ist.

20. Vorrichtung nach einem der Ansprüche 1 bis 19, dadurch gekennzeichnet, daß in den einander zugekehrten Seitenflächen der Kontaktklemmen (4 und 5) zu den Seitenflächen hin offene, vorzugsweise muldenartige Ausnehmungen (15) vorgesehen sind, wobei im Bereich zwischen den Kontaktklemmen (4 und 5) eine Leitung zum Zuführen von Schutzgas, beispielsweise Argon, während des Schweißvorganges ausmündet.

**Claims**

1. Device for butt welding of hollow profiled strips, especially of profiled strips of aluminium for spacer frames for insulating glass, with two contact clamps for the ends of the profiled strips to be joined together, wherein the contact clamps (4 and 5) are connectable to a welding current source, one contact clamp (4), preferably the second contact clamp (4) regarded in the feed direction, being arranged fixedly relative to the machine frame, the other, movable contact clamp (5) being arranged on a table (3) supported movably in the feed direction (arrow 10) on the machine frame (18) by way of two link pairs (19 and 20) arranged spaced from one another in the manner of a parallellogram link pair, and wherein the table (3) is movable with the aid of of a pressure medium cylinder (22), characterized in that the link-arms of the link pair (19) arranged substantially beneath the movable contact clamp (5) are connected into a frame and in that there is provided for the to and fro movement (arrow 21) of the table (3) carrying the movable contact clamp (5) a counter-pressure cylinder (22), whose counter- pressure chamber can be abruptly vented by way of a seating valve.

2. Device according to claim 1, characterized in that the space between the contact clamps (4 and 5) arranged at a spacing from one another is covered by strips (16 and 17) of electrically nonconductive material, the strips (16, 17) being preferably connected to one of the contact clamps (5).

3. Device according to claim 1 or 2, characterized in that each of the contact clamps (4 and 5) comprises a lower fitting (6) with a guide groove (9) for the hollow profiled strip and a vertically (arrow 8) adjustable, upper pressure fitting (7).

4. Device according to claim 3, characterized in that the movable fitting (7) is arranged on a perpendicular rearwardly projecting link (14), on which there engages a drive motor (12), preferably a pressure medium motor, for downwardly pressing the fitting (7).

5. Device according to claims 1 to 4, characterized in that there are provided devices (24 and 25) following the contact clamps (4 and 5) for trimming off welding beads.

6. Device according to claim 5, characterized in that there are provided one trimming device (24) for working the upwardly facing wall and one trimming device (25) for working the side walls of the hollow profiled strip.

7. Device according to claim 5 or 6, characterized in that in the region of the trimming devices (24 and 25) there is provided a transport gripper (27) coordinated with the hollow profiled strip, slidable backwards and forwards parallel to the feed track (23), for stepwise forward displacement of the welding location in the region of the first trimming device (24) and following thereon in the region of the second trimming device (25).

8. Device according to claim 6 or 7, characterized in that there is provided between the trimming devices (24 and 25) a hold-down (26) for clampingly fixing the hollow profiled strip during the trimming operations and during the return stroke of the transport gripper (27).

9. Device according to one of claims 5 to 8, characterized in that the feed track for the hollowing profiled strip is formed in the region of the trimming devices (24 and 25) as a sliding track (23).

10. Device according to one of claims 6 to 9, characterized in that the trimming device (24) for working the upwardly facing wall of the hollow profiled strip comprises a trimming tool (28) driven in rotation about an axis parallel to the transport direction (arrow 10, 51), which is displaceable backwards and forwards transverse (arrow 32) to the transport direction (arrows 10, 51).

11. Device according to one of claims 6 to 10, characterized in that the trimming tool (25) for working the side walls of the hollow profiled strip comprise a trimming tool (36) at a fixed position, rotatable about a substantially vertical axis, and guide rollers (38) arranged on the two sides thereof, which bear against the one side wall of the hollow profiled strip, an a trimming tool (37) rotatable about a substantially vertical axis, displaceable on a slide (39) transverse to the transport direction (arrow 10, 51), guide rollers (42) which bear against the side wall of the hollow profiled strip during the trimming operation being arranged on the slide (39) to both sides of the trimming tool (37).

12. Device according to one of claims 7 to 11, characterized in that the transport gripper (27) for stepwise forward displacement of the hollow profiled strip comprises clamping jaws (48) arranged on both sides of the hollow profiled strip, which are displaceable preferably from both sides simultaneoulsy into abutment with the sidewalls of the hollow profiled strip by a pressure medium motor (49).

13. Device according to claim 12, characterized in that the clamping jaws (48) of the transport gripper are arranged on a slide (43), which is displaceable to and fro on guide rails (44) by a driver motor (45), preferably a pressure medium motor.

14. Device according to claim 12 or 13, characterized in that the clamping jaws (48) are guided on guide rails (47) arranged on the slide (43), the one clamping jaw (48) being coupled to the piston and the other clamping jaw to the cylinder of a pressure medium motor (49).

15. Device according to one of claims 1 to 14, characterized in that the movable table (3) has associated micro-switches adjustable by micrometer screws, for control of the current feed to the contact clamps (4 and 5) and/or the movements of the movable table (3).

16. Device according to one of claims 1 to 15, characterized in that a support wall rearwardly inclined by a few degrees projects up from the guide track for the hollow profiled strips to be bent into spacer frames, an in that cut-outs are provided for the contact clamps (4 and 5), the trimming devices (24 and 25) and the hold-down fitting (26).

17. Device according to one of claims 1 to 15, characterized in that there is provided, after the contact clamps (4 and 5), a measuring member sensing the length of the hollow profiled strip, e. g. an incremental transducer equipped with a wheel rolling on the moving hollow profiled strip, and a parting apparatus, e. g. a cap circular saw or the like, operatively coupled to the measuring member for cutting to length profiled strip pieces of predetermined length.

18. Device according to claim 17, characterized in that a marking tool is coupled to the measuring member for marking the centre of a profiled strip piece cut to length or to be cut to length.

19. Device according to claim 18, characterized in that the marking tool comprises a lever pivotable about an axis running transverse to the transport direction (arrow 10, 51), with a nose facing the upper wall of the hollow profiled strip and marking this with a notch, a pressure medium cylinder or the like being provided for pivoting the lever.

20. Device according to one of claims 1 to 19, characterized in that preferably trough-like recess (15) are provided in the facing side surfaces of the contact clamps (4 and 5), open to the side surfaces, a duct for the supply of protective gas, for examples argon, during the welding operation, opening into the region between the contact clamps (4 and 5).

## Revendications

1. Dispositif pour souder bout à bout des profilés creux, notamment des profilés en aluminium pour cadres intercalaires pour vitrages isolants, comportant deux pinces de contact pour les extrémités des profilés creux à assembler, les pinces de contact (4 et 5) pouvant être raccordées à une source de courant de soudage, une pince de contact (4) de préférence la pince de contact (4) qui est la deuxième en considérant la direction du transport, étant agencée fixe sur le bâti du dispositif, l'autre pince de contact (5), mobile, étant agencée sur une table (3) prenant appui, avec possibilité de mouvement dans la direction du transport (flèche 10), sur le bâti du dispositif (18) par l'intermédiaire de deux paires de bielles (19 et 20) agencées à distance l'une de l'autre à manière d'une paire de bielles d'un parallélogramme déformable, et la table (3) étant mobile à l'aide d'un cylindre à fluide de pression (22), caractérisé par le fait que les bielles de la paire de bielles (19) agencée sensiblement en dessous de la pince de contact mobile (5) sont assemblés en un cadre, et par le fait que, pour le va-et-vient (flèche 21) de la table (3) portant la pince de contact mobile (5), il est prévu un cylindre de contrepression (22) dont la chambre de contrepression peut être mise en condition de détente subite par une soupape à siège.

2. Dispositif selon revendication 1, caractérisé par le fait que l'espace intermédiaire entre les pinces de contact ( 4 et 5) agencées à distance l'une de l'autre est recouvert par des barrettes (16 et 17) en matière ne conduisant pas le courant électrique, les barrettes (16, 17) étant de préférence fixées à l'une des pinces de contact (5).

3. Dispositif selon revendication 1 ou 2, caractérisé par le fait que chacune des pinces de contact (4 et 5) présente une mâchoire inférieure (6) présentent une rainure de guidage (9) pour le profilé creux et une mâchoire de pression supérieure (7) mobile verticalement (flèche 8).

4. Dispositif selon revendication 3, caractérisé par le fait que la mâchoire mobile (7) est agencée sur une bielle (14) débordant perpendiculairement vers l'arrière, cette bielle étant attaquée par un moteur d'entraînement (12), de préférence un moteur à fluide de pression, pour appuyer la mâchoire (7) vers le bas.

5. Dispositif selon l'une des revendications 1 à 4, caractérisé par le fait que des dispositifs (24 et 25) pour enlever par fraisage les bourrelets de soudure sont prévus à la suite des pinces de contact (4 et 5).

6. Dispositif selon revendication 5, caractérisé par le fait qu'il est prévu un dispositif de fraisage (24) pour l'usinage de la paroi tournée vers le haut et un dispositif de fraisage (25) pour l'usinage des parois latérales du profilé creux.

7. Dispositif selon revendication 5 ou 6, caractérisé par le fait qu'il est prévu, dans la région des dispositifs de fraisage (24 et 25), une griffe de transport (27) conjuguée au profilé creux, mobile en va-et-vient parallèlement à la piste de transport (23) du profilé creux, pour faire avancer périodiquement la soudure dans la région du premier dispositif de fraisage (24) puis dans la région du deuxième dispositif de fraisage (25).

8. Dispositif selon revendication 6 ou 7, caractérisé par le fait qu'il est prévu, entre les dispositif de fraisage (24 et 25), un dispositif de serrage (26) pour immobiliser par serrage le profilé creux pendant les opérations de fraisage et pendant la course à vide de la griffe de transport (27).

9. Dispositif selon l'une des revendications 5 à 8, caractérisé par le fait que la piste de transport pour le profilé creux est aménagée en tant que piste de glissement (23) dans la région des dispositifs de fraisage (24 et 25).

10. Dispositif selon l'une des revendications 6 à 9, caractérisé par le fait que le dispositif de fraisage (24) pour l'usinage de la paroi du profilé creux tournée vers le haut comporte un outil de fraisage (28) entraîné en rotation autour d'un axe parallèle à la direction du transport (flèche 10, 51), cet outil étant mobile dans la sens du rapprochement et de l'éloignement, transversalement (flèche 32) à la direction de transport (flèches 10, 51).

11. Dispositif selon l'une des revendications 6 à 10, caractérisé par le fait que l'outil de fraisage (25) pour l'usinage des parois latérales du profilé creux présentent un outil de fraisage (36) fixe, tournant autour d'un axe sensiblement vertical, et des galets de guidage (38) disposés des deux côtés de cet outil, lesquels s'appliquent contre une paroi latérale du profilé creux, et en outil de fraisage (37) tournant autour d'un axe sensiblement vertical, et mobile sur un chariot (39) transversalement à la direction de transport (flèche 10, 51), des rouleaux de guidage (42) étant agencés sur le chariot (39), des deux côtés de l'outil de fraisage (37) et s'appliquant contre la paroi latérale du profilé creux pendant le fraisage.

12. Dispositif selon l'une des revendications 7 à 11, caractérisé par le fait que la griffe de transport (27) pour faire avancer périodiquement le profilé creux présente des mâchoires de serrage (48) agencées des deux côtés du profilé creux, lesquelles peuvent, au moyen d'un moteur à fluide de pression (49), être amenées simultanément, de préférence par les deux côtés, au contact des parois latérales du profilé creux.

13. Dispositif selon revendication 12, caractérisé par le fait que les mâchoires de serrage (48) de la griffe de transport sont agencées sur un chariot (43) qui, au moyen d'un moteur d'entraînement (45), de préférence un moteur à fluide de pression, est mobile en va-et-vient sur des rails de guidage (44).

14. Dispositif selon revendication 12 ou 13, caractérisé par le fait que les mâchoires de serrage (48) sont guidées sur des rails de guidage (47) agencés sur le chariot (43), la première mâchoire de serrage (48) étant couplée au piston et l'autre mâchoire de serrage (48) étant couplée au cylindre d'un moteur à fluide de pression (49).

15. Dispositif selon l'une des revendications 1 à 14, caractérisé par le fait que des micro-interrupteurs réglables par vis micrométrique, pour commander l'amenée de courant aux pinces de contact (4 et 5) et/ou les mouvements de la table mobile (3) sont associés à la table mobile (3).

16. Dispositif selon l'une des revendications 1 à 15, caractérisé par le fait qu'une paroi de soutien inclinée de quelques degrés vers l'arrière déborde vers le haut, depuis la piste de guidage pour les profilés creux façonnées en cadres intercalaires, et par le fait que des découpes sont prévues dans la paroi de soutien, pour les pinces de contact (4 et 5), les dispositifs de fraisage (24 et 25) et la mâchoire de serrage (26).

17. Dispositif selon l'une des revendications 1 à 15, caractérisé par le fait qu'il est prévu, après les pinces de contact (4 et 5), un organe de mesure mesurant la longueur du profilé creux, par exemple un capteur incrémental équipé d'une roue roulant sur le profilé creux se déplaçant, et un appareil de sectionnement, par exemple une scie circulaire sous capot ou analogue, fonctionnellement couplé à l'organe de mesure, pour couper à une longueur prédéterminée des portions de profilé creux.

18. Dispositif selon revendication 17, caractérisé par le fait qu'à l'organe de mesure est couplé un outil de marquage pour marquer le milieu d'une portion de profilé creux mise ou à mettre à longueur.

19. Dispositif selon revendication 18, caractérisé par le fait que l'outil de marquage présente un levier pouvant pivoter autour d'un axe dirigé transversalement à la direction du transport (flèche 10, 51) et doté d'un bec tourné vers la paroi supérieure du profilé creux qu'il marque par encochage, un cylindre à fluide de pression, ou analogue, étant prévu pour faire pivoter ce levier.

20. Dispositif selon l'une des revendications 1 à 19, caractérisé par le fait qu'il est prévu, dans les surfaces latérales, tournées l'une vers l'autre, des pinces de contact (4 et 5), des évidements (15), de préférence en forme de cuvette, ouverts vers les surfaces latérales, une conduite pour amener un gaz protecteur, par exemple l'argon, pendant le soudage, débouchant dans la région entre les pincés de contact (4 et 5).

FIG.1

0 192 921

FIG.2